# EUROPÄISCHE PATENTSCHRIFT

(11) **EP 3 053 494 B1**
(45) Veröffentlichungstag und Bekanntmachung des Hinweises auf die Patenterteilung: **14.08.2019**
(21) Anmeldenummer: 16151714.9
(22) Anmeldetag: 18.01.2016
(51) Int. Cl.: A47J 31/44, F25D 31/00

(54) **VERFAHREN ZUR KÜHLUNG VON FLÜSSIGKEITEN FÜR EINE GETRÄNKEZUBEREITUNGSVORRICHTUNG UND GETRÄNKEZUBEREITUNGSVORRICHTUNG**
METHOD FOR COOLING FLUIDS FOR A BEVERAGE PREPARATION MACHINE AND BEVERAGE PREPARING MACHINE
METHODE POUR REFROIDIR DES LIQUIDES POUR UNE MACHINE DE PREPARATION DE BOISSONS ET MACHINE DE PREPARATION DE BOISSONS

(30) Priorität: 04.02.2015 DE 102015201946
(43) Veröffentlichungstag der Anmeldung: 10.08.2016
(73) Patentinhaber: WMF Group GmbH, 73312 Geislingen/Steige (DE)
(72) Erfinder: Göltenboth, Frank, 89134 Blaustein (DE); Arndt, Peter, 89134 Blaustein (DE)
(74) Vertreter: Pfenning, Meinig & Partner mbB

(56) Entgegenhaltungen:
- EP-A2- 2 833 091
- CH-A- 433 042
- DE-U1-202006 014 208
- GB-A- 904 380
- GB-A- 2 154 206

## Beschreibung

Die Erfindung betrifft ein Verfahren zur Kühlung von Flüssigkeiten für eine Getränkezubereitungsvorrichtung, bei dem eine zu kühlende Flüssigkeit durch mehrfache Förderung mittels einer Pumpe durch einen Durchlaufkühler gefördert wird, bis eine vorgegebene Temperatur erreicht wird. Ebenso betrifft die Anmeldung eine entsprechende Getränkezubereitungsvorrichtung.

Bei Heißgetränkebereitern oder Kaffeevollautomaten sind Kaffeespezialitäten wie Cappuccino, Latte Macchiato, oder Cafe Latte sehr beliebt. Hierzu wird Milch und Milchschaum benötigt, was eine Bevorratung von Milch in oder bei der Kaffeemaschine notwendig macht. Aus Gründen der Haltbarkeit, Frische und Hygiene sollte Milch gekühlt aufbewahrt werden.

Zur Milchkühlung werden in der Regel Bevorratungskühler verwendet, wie sie zum Beispiel aus der DE 10 2009 036 089 A1 bekannt sind. Als Kühlaggregate werden dabei meist Kompressoraggregate oder Peltierelemente verwendet. Ebenso sind auch Durchlaufkühler, z.B. aus der DE 10 2008 058 934 A1, bekannt, die die Milch erst bei der Ausgabe für Kaltmilch auf die Ausgabetemperatur herunterkühlen.

Die Durchlaufkühler haben den Nachteil, dass die Milch bei Raumtemperatur gelagert wird und in der Zeit bis zur Ausgabe verkeimen kann. Durch die Abkühlung zur Ausgabe ändert sich an diesem Zustand nichts und es kommt zur Ausgabe von verkeimter Milch.

Die Bevorratungskühler haben diesen Nachteil nicht, sind aber technisch sehr aufwendig, da sie ein vollwertiger Minikühlschrank sind, mit Kühlaggregat, isolierte Innenraum mit integrierten Kühlschlangen und einer Tür als Zugang in den Innenraum. Die Milch wird hier permanent in einem gekühlten Innenraum (z.B. 4°C) aufbewahrt. Hier ist der Nachteil der teure Aufbau, der Energieverbrauch, um Innenraum und Aufbewahrungsgut permanent kühl zu halten, sowie die lange Abkühlzeit, um den Inhalt herunter zu kühlen. Die Kühlung erfolgt nur durch die kalte Luft des Innenraums und Luft ist ein schlechter Wärmeleiter. So dauert es z.B. mehr als 6 Stunden um 4 Liter Milch von Raumtemperatur (20°C) auf 4°C herunter zu kühlen, d.h. für die Praxis muss die Milch vorgekühlt werden, ansonsten wird in den ersten Stunden warme Milch verarbeitet, die wiederum in dieser Zeit Keime bilden kann.

Um ein flüssiges Medium in einem Kühlschrank abkühlen zu können, muss die Umgebungstemperatur in dem Kühlschrank geringer sein als die Zieltemperatur des zu kühlenden Mediums. Je schneller die Abkühlung erfolgen soll, desto größer muss das Temperaturgefälle der Innenraumtemperatur zum zu kühlenden Medium sein. Bei einer Bevorratungstemperatur von z.B. 4°C kommt es daher häufig zur Eisbildung an den Innenwänden des Kühlgefäßes, wie auch teilweises Gefrieren der Milch an den Behälterwänden oder dem Schlauchabgang. Die Kühlleistung nimmt damit ab und verstärkt den Effekt zusätzlich.

Dokument GB-A-2154206 offenbart ein Verfahren nach dem Oberbegriff des unabhängigen Anspruchs 1 sowie eine Getränkezubereitungsvorrichtung nach dem Oberbegriff des unabhängigen Anspruchs 11.

Es war daher Aufgabe der vorliegenden Erfindung, ein Verfahren bereitzustellen, mit dem eine Kühlung von keimanfälligen Flüssigkeiten möglich ist. Dabei sollte dieses Verfahren mit einem geringen technischen Aufwand und geringen Betriebskosten verbunden sein.

Diese Aufgabe wird durch das Verfahren mit den Merkmalen des Anspruchs 1 und die Getränkezubereitungsvorrichtung mit den Merkmalen des Anspruchs 11 gelöst. Die weiteren abhängigen Ansprüche zeigen vorteilhafte Weiterbildungen auf.

Erfindungsgemäß wird ein Verfahren zur Kühlung von Flüssigkeiten für eine Getränkezubereitungsvorrichtung bereitgestellt, bei dem eine zu kühlende Flüssigkeit mittels einer Pumpe (5) so oft durch einen Durchlaufkühler (4) gefördert wird, bis die mindestens eine zu kühlende Flüssigkeit auf eine vorgegebene Temperatur gekühlt wird.

Hierbei kann in Abhängigkeit von der vorgegebenen Temperatur sowohl ein einmaliges Passieren des Durchlaufkühlers als auch ein mehrfaches Passieren des Durchlaufkühlers vorgesehen sein.

Das Prinzip des erfindungsgemäßen Durchlaufkühlers beruht darauf, dass die Kälteenergie direkt an die zu kühlende Flüssigkeit abgegeben wird. Die Flüssigkeit wird vom Aufbewahrungsbehälter mittels einer Pumpe zum Durchlaufkühler und von diesem wieder zurück in den Aufbewahrungsbehälter gefördert. Dieser Kreislauf wiederholt sich dann solange, bis sich bei einer zu hohen Temperatur der zu kühlenden Flüssigkeit die gewünschte Bevorratungstemperatur im Aufbewahrungsbehälter eingestellt hat. Ebenso ist es möglich, dass der Durchlaufkühler temporär, z.B. zyklisch, betrieben wird, damit sich die keimanfällige Flüssigkeit nicht durch den Energieeintrag aus der Umgebung erwärmt.

Erfindungsgemäß wird die Temperatur der zu kühlenden Flüssigkeiten mit mindestens einer Temperaturmesseinheit gemessen. Als Temperaturmesseinheit eignen sich dabei insbesondere Temperatursensoren, wobei sowohl ein einziger Temperatursensor als auch mehrere, an unterschiedlichen Stellen in der Getränkezubereitungsvorrichtung angeordnete Sensoren vorliegen können. Die Temperatursensoren können dabei z.B. am Aufbewahrungsbehälter, am Durchlaufkühler oder an der Förderpumpe angeordnet sein. Ebenso ist eine Anordnung in den Zu- und Ableitungen, die sich zwischen Aufbewahrungsbehälter und Pumpe befinden, möglich. Sobald die vorgegebene Temperatur bei der Messung mit der Temperaturmesseinheit überschritten wird, wird die Pumpe aktiviert und die zu kühlende Flüssigkeit so häufig durch den durch Durchlaufkühler gefördert, bis die vorgegebene Temperatur wieder erreicht bzw. unterschritten ist.

Für die im Verfahren einzusetzende Pumpe gibt es zwei bevorzugte Varianten. Bei der ersten Variante wird eine separate Pumpe eingesetzt, die alleine für die Förderung der zu kühlenden Flüssigkeit zuständig ist. Eine zweite bevorzugte Variante sieht vor, dass die in der Getränkezubereitungsvorrichtung enthaltene Pumpe für die Förderung anderer Flüssigkeiten, wie z.B. dem Wasser zur Zubereitung eines Heißgetränkes oder dem Heißgetränk selber, auch für die Förderung der zu kühlenden Flüssigkeit verwendet wird. Hierzu ist es erforderlich, dass mittels eines Ventils eine Umschaltung zwischen der Förderung der verschiedenen Flüssigkeiten erfolgt. Dies stellt eine besonders ökonomische Variante für die Förderung der Flüssigkeiten in der Getränkezubereitungsvorrichtung dar.

Eine weitere bevorzugte Ausführungsform des erfindungsgemäßen Verfahrens sieht vor, dass der eingesetzte Durchlaufkühler einen Kühlkörper mit mäanderförmigen oder spiralförmigen Kanälen aufweist. So ist es beispielsweise möglich, dass der Durchlaufkühler aus zwei symmetrischen Halbschalen besteht, die mediendicht zusammengefügt einen mäanderförmigen Kanal mit einem Zu- und Ablauf für die keimanfällige Flüssigkeit bilden. Bei den spiralförmigen Kanälen können diese bevorzugt von außen nach innen verlaufen, aber auch andere Formen aufweisen.

Der Kühlblock ist vorzugsweise aus lebensmitteltauglichen Materialien gefertigt, die eine gute Wärmeleitung aufweisen. Ebenso kann der Kühlblock ein Material mit guter Wärmeleitfähigkeit, z.B. Kupfer, enthalten, das mit einer lebensmitteltauglichen Beschichtung versehen ist, z.B aus Gold oder Silber, wobei Silber aufgrund dessen entkeimenden Wirkung bevorzugt ist.

Vorzugsweise erfolgt die Kühlung dadurch, dass der Kühlblock mit einem Peltierelement, einem Kompressor, einem Absorber, einem Kühlmedium, insbesondere flüssigem Stickstoff, oder Kombinationen hiervon thermisch kontaktiert wird. Bevorzugt ist hierbei ein Peltierelement, das zum Beispiel Rippen zur Abfuhr der Abwärme aufweisen kann. Der Vorteil von Peltierelementen ist dabei deren geringe Baugröße und dass diese Elemente keine zum Verschleiß neigenden beweglichen Teile aufweisen sowie auf umweltschädliche Kältemittel verzichtet werden kann.

Für den Aufbewahrungsbehälter existieren erfindungsgemäß verschiedenene Alternativen.

Eine erste bevorzugte Ausführungsform sieht vor, dass der Aufbewahrungsbehälter ein Verpackungsgebinde ist, wie es üblicherweise im Lebensmittelhandel erhältlich ist. Hierzu zählt insbesondere ein Tetrapak.

Eine weitere bevorzugte Ausführungsform sieht vor, dass der Aufbewahrungsbehälter eine thermische Isolierung, z.B. einen Isoliermantel, aufweist. Diese Variante ermöglicht, dass die Kühlleistung des Durchlaufkühlers reduziert werden kann, was eine Kostenersparnis darstellt. Teilweise kann es aber auch schon ausreichend sein, die Transport- oder Verkaufsverpackung der keimanfälligen Flüssigkeit zu verwenden, da diese teilweise schon isolierend wirken.

Eine dritte erfindungsgemäße Variante sieht vor, dass der Aufbewahrungsbehälter keine thermische Isolierung aufweist, aber in einer thermisch isolierten Einheit angeordnet ist.

Typische Beispiele für eine zu kühlende Flüssigkeit sind Milchprodukte. Untersuchungen bei Milchprodukten haben dabei gezeigt, dass eine Temperatur von 15°C einen Schwellenwert darstellt, und unterhalb dessen so gut wie keine Keimvermehrung stattfindet. Steigt die Temperatur hingegen auf etwa 35°C, so nimmt die Vermehrung der Keime in der Milch stark zu. Aufgrund der Tatsache, dass die Milch über die Lufttemperatur nur sehr langsam erwärmt wird, kann es ausreichend sein, die Milch nur sporadisch, d.h. temporär durch den Durchlaufkühler laufen zu lassen. Ebenso ist es aber auch denkbar, dass eine permanente Förderung der keimanfälligen Flüssigkeit durch den Durchlaufkühler erfolgt.

Eine weitere bevorzugte Variante des erfindungsgemäßen Verfahrens sieht vor, dass der Aufbewahrungsbehälter für die zu kühlende Flüssigkeit in einem zusätzlichen Schritt mit einer Reinigungsflüssigkeit befüllt wird, die Reinigungsflüssigkeit anschließend durch den Durchlaufkühler gefördert wird und so eine Reinigung der Getränkezubereitungsvorrichtung erfolgt.

Erfindungsgemäß wird ebenso eine Getränkezubereitungsvorrichtung mit einem Aufbewahrungsbehälter für eine zu kühlende Flüssigkeit, einen über eine Zuleitung und eine Ableitung mit dem Aufbewahrungsbehälter verbundenen Durchlaufkühler, eine Pumpe für die Förderung der zu kühlenden Flüssigkeit und einer Temperaturmesseinheit zur Messung der Temperatur der zu kühlenden Flüssigkeit bereitgestellt.

Die erfindungsgemäße Vorrichtung weist dabei folgende Vorteile auf:
- auf einen klassischen Kühlschrank für die Kühlung des Mediums kann verzichtet werden, wodurch der technische Aufwand wesentlich verringert werden kann
- der mechanischer Aufbau des Aufbewahrungsbehälters ist einfach, wodurch eine kostengünstige Herstellung ermöglicht wird, in der kostengünstigen Ausführung kann sogar auf einen isolierten Aufbewahrungsbehälter verzichtet werden
- die robuste, verschleißfreie Technik des Durchlaufkühlers ermöglicht ein hohe Lebensdauer der Vorrichtung
- die Vorrichtung ist leicht zu reinigen und zu spülen
- bei abgekühlter Flüssigkeit (z.B. wenn diese aus dem Kühlschrank entnommen wird) muss nur der Wärmeeintrag aus der Umgebung ausgeglichen werden, wodurch die elektrische Leistung möglichst gering gehalten werden. Wird das Netzteil der Maschine für die Stromversorgung des Kühlelements genutzt, so steht in Pausenzeiten des Kühlelements diese Leistung vom Netzteil der Maschine zur Verfügung. Bei entsprechenden Milchverbrauch wird nur einmaliges Herunterkühlen notwendig sein
- die Vorrichtung zeichnet sich durch einen geringer Energieverbrauch aus
- es können Aufbewahrungsbehälter beliebiger Größe und Geometrie verwendet werden
- der Durchlaufkühler kann in oder an der Maschine verbaut sein oder dem Milchbehälter zugeordnet werden.

In einer bevorzugten Ausführungsform weist der Durchlaufkühler einen Kühlkörper mit mäanderförmigen oder spiralförmigen Kanälen auf. Der Kühlkörper kann dabei mit einem Peltierelement, einem Kompressor, einem Absorber, einem Kühlmedium, insbesondere Stickstoff, oder Kombinationen hiervon thermisch gekoppelt sein.

Die mindestens eine Temperaturmesseinheit in der Getränkezubereitungsvorrichtung ist dabei vorzugsweise ein Temperatursensor zur Messung der Temperatur der zu kühlenden Flüssigkeit.

Die Pumpe kann an beliebigen Positionen innerhalb der Getränkezubereitungsvorrichtung angeordnet sein. Vorzugsweise ist dabei die Pumpe zwischen dem Aufbewahrungsbehälter für die zu kühlende Flüssigkeit und den Durchlaufkühler angeordnet.

Der Aufbewahrungsbehälter weist vorzugsweise eine thermische Isolierung, z.B. in Form eines Isoliermantels auf.

Der Durchlaufkühler kann sowohl in der Getränkezubereitungsvorrichtung integriert sein oder auch zusammen mit dem Aufbewahrungsbehälter als externe Einheit außerhalb der Getränkezubereitungsvorrichtung vorgesehen sein.

Anhand der nachfolgenden Figuren soll der erfindungsgemäße Gegenstand näher erläutert werden, ohne diesen auf die hier gezeigten spezifischen Ausführungsformen einschränken zu wollen.
Fig. 1 zeigt eine erste Ausführungsform der erfindungsgemäßen Vorrichtung.
Fig. 2 zeigt eine zweite Ausführungsform der erfindungsgemäßen Vorrichtung.
Fig. 3 zeigt eine weitere Ausführungsform der erfindungsgemäßen Vorrichtung.
Fig. 4 zeigt den Aufbau einer ersten Variante des erfindungsgemäßen Durchlaufkühlers.
Fig. 5 zeigt eine zweite Variante der erfindungsgemäßen Durchlaufkühlung.
Fig. 6 zeigt eine Ausführungsform der erfindungsgemäßen Vorrichtung.
Fig. 7 zeigt eine Ausführungsform der erfindungsgemäßen Vorrichtung.
Fig. 8 zeigt eine weitere Ausführungsform der erfindungsgemäßen Vorrichtung.

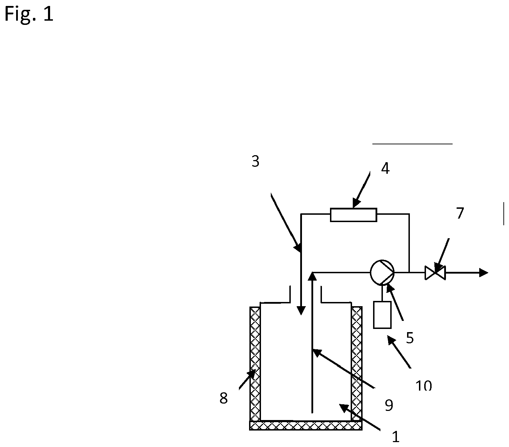

In Fig. 1 ist der Aufbau einer erfindungsgemäßen Vorrichtung dargestellt. Der Aufbewahrungsbehälter 1 enthält die zu kühlende Flüssigkeit, z.B. Milch, wobei diese optional eine thermische Isolierung 8 zur Reduzierung des Wärmeeintrags aus der Umgebung aufweisen kann. Über eine Ansaugleitung 9 wird die Milch mittels der Pumpe 5 über die Zuleitung 2 zum Durchlaufkühler 4 gefördert. Vom Durchlaufkühler 4 wird die Milch dann über die Ableitungen 3 wieder zurück in den Aufbewahrungsbehälter 1 geleitet. Je nach den Grad der benötigten Abkühlung kann der Vorgang einfach oder mehrfach durchgeführt werden. Dies kann auch bis zum permanenten Betrieb gehen. Für die Zubereitung eines Heißgetränks wird dann das Ventil 7 zugeschaltet, das die Milch zur Ausgabestation der Getränkezubereitungsvorrichtung geleitet wird.

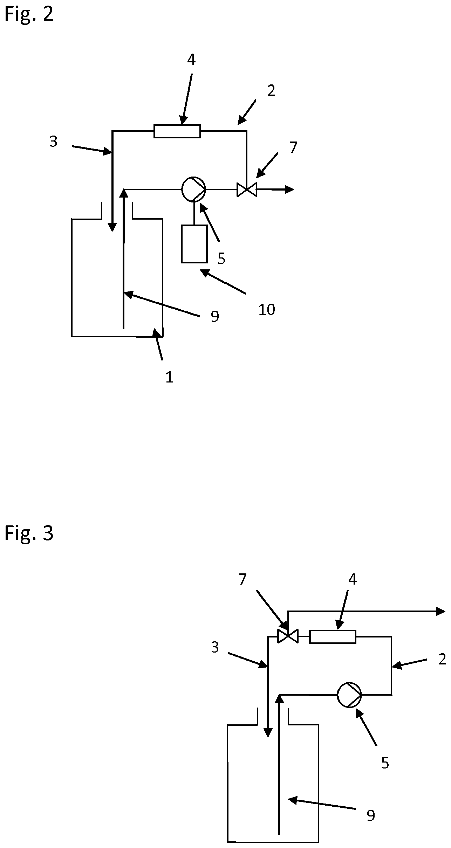

In Fig. 2 ist eine Variante der erfindungsgemäßen Vorrichtung dargestellt, bei der zwischen der Pumpe 5 und dem Durchlaufkühler 4 das Ventil 7 angeordnet ist, so dass hier durch Umschalten des Ventils 7 festgelegt wird, ob die Milch weiter über den Durchlaufkühler 4 abgekühlt wird oder zur Ausgabestation der Getränkezubereitungsvorrichtung geleitet wird. Ansonsten wird auch hier die Milch aus dem Aufbewahrungsbehälter 1 über eine Ansaugleitung 9 mittels der Pumpe 5 über eine Ventil 7 und die Zuleitung 2 zum Durchlaufkühler 4 gefördert. Vom Durchlaufkühler 4 wird die Milch dann über die Ableitungen 3 wieder zurück in den Aufbewahrungsbehälter 1 geleitet.

Fig. 3 zeigt dann eine erfindungsgemäße Variante, bei der das Ventil 7 hinter dem Durchlaufkühler 4 angeordnet ist. Ansonsten wird auch hier die Milch aus dem Aufbewahrungsbehälter 1 über eine Ansaugleitung 9 mittels der Pumpe 5 über die Zuleitung 2 zum Durchlaufkühler 4 gefördert. Vom Durchlaufkühler 4 wird die Milch dann über das Ventil 7 und die Ableitung 3 wieder zurück in den Aufbewahrungsbehälter 1 geleitet.

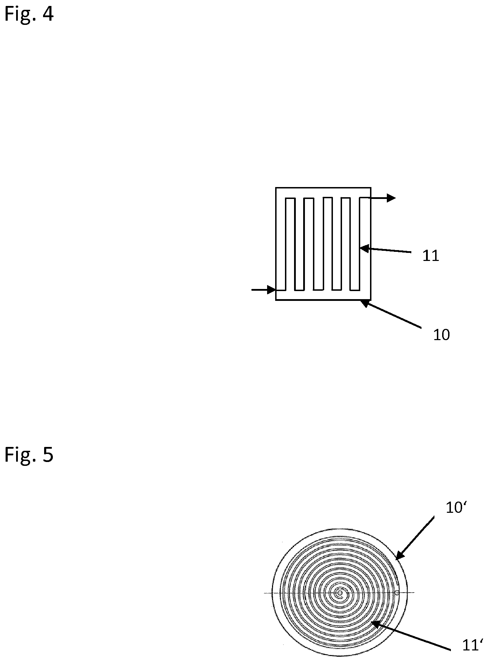

In Fig. 4 ist eine Variante des erfindungsgemäßen Durchlaufkühlers dargestellt, der aus einem Kühlkörper 10 besteht, in dem ein mäanderförmiger Kanal 11 für das Kältemedium angeordnet ist.

Fig. 5 zeigt eine weitere Variante eines erfindungsgemäßen Durchlaufkühlers mit einem Kühlkörper 10', in dem ein spiralförmiger Kanal 11' für das Kältemedium vorgesehen ist.

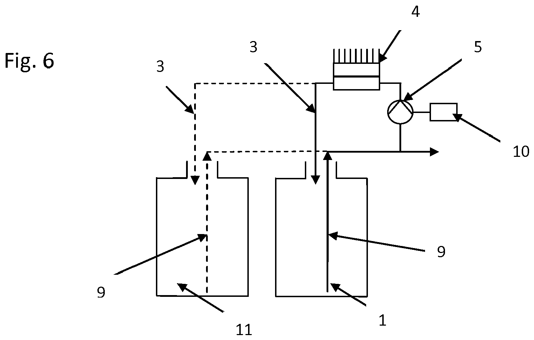

Fig. 6 zeigt eine Variante der erfindungsgemäßen Vorrichtung, bei dem in dem Milchbehälter (1) zusätzlich ein Behälter (11) eingesetzt wird, der mit dem Milchbehälter (1) im Kreislauf getauscht werden kann. Dieser Behälter (11) kann zum Beispiel eine Reinigungsflüssigkeit enthalten. Die Ansaugleitung (9) und die Ableitung (3) können dabei zunächst im Milchbehälter (1) positioniert werden. Zur Reinigung des Systems kann dann eine Überführung der Ansaugleitung (9) und der Ableitung (3) in den Behälter (11) erfolgen. Mittels der Pumpe wird dann anstelle von Milch eine Reinigungsflüssigkeit durch den Kreislauf gepumpt. Dies stellt ein einfaches System zur Reinigung einer erfindungsgemäßen Getränkezubereitungsvorrichtung dar.

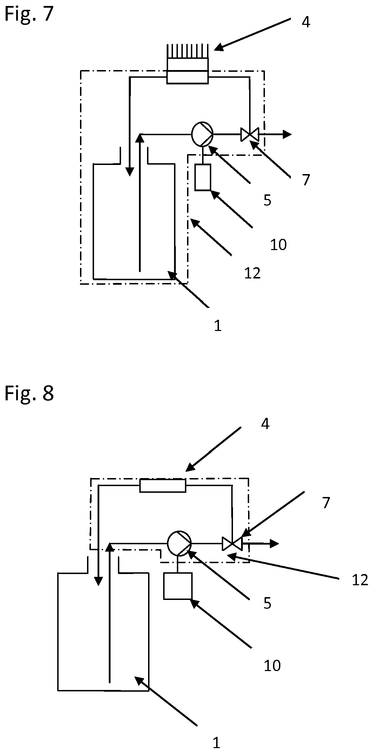

Fig. 7 zeigt eine erfindungsgemäße Variante der Getränkezubereitungsvorrichtung, bei der der Aufbewahrungsbehälter (1), die Pumpe (5) mit Antrieb (10), das Ventil (7) und der Durchlaufkühler (4) in einer thermisch isolierenden Box (12) angeordnet sind.

Fig. 8 zeigt eine erfindungsgemäße Variante, bei der der Durchlaufkühler (4), die Pumpe (5) mit Antrieb (10) und das Ventil (7) in einer thermisch isolierenden Box (12) angeordnet ist. In diesem Beispiel befindet sich der Aufbewahrungsbehälter (1) außerhalb der thermisch isolierenden Box (12).

## Patentansprüche

1. Verfahren zur Kühlung von Flüssigkeiten für eine Getränkezubereitungsvorrichtung, bei dem eine zu kühlende Flüssigkeit mittels einer Pumpe (5) durch einen Durchlaufkühler (4) gefördert wird, wobei die zu kühlende Flüssigkeit in einem nicht gekühlten Aufbewahrungsbehälter (1) gelagert wird,
**dadurch gekennzeichnet, dass** die zu kühlende Flüssigkeit mittels der Pumpe (5) so oft durch den Durchlaufkühler (4) gefördert wird, bis die zu kühlende Flüssigkeit auf eine vorgegebene Temperatur gekühlt wird, wobei die Pumpe (5) aktiviert wird, sobald die vorgegebene Temperatur bei der Messung mit einer Temperaturmesseinheit (6) überschritten wird.

2. Verfahren nach Anspruch 1,
**dadurch gekennzeichnet, dass** die mindestens eine Temperaturmesseinheit (6) einen Temperatursensor umfasst.

3. Verfahren nach einem der vorhergehenden Ansprüche,
**dadurch gekennzeichnet, dass** die vorgegebene Temperatur der zu kühlenden Flüssigkeit im Bereich bis maximal der Temperatur liegt, bei der eine Keimvermehrung in der zu kühlenden Flüssigkeit initiiert wird, bevorzugt im Bereich von 0°C bis 15°C, besonders bevorzugt im Bereich von 4°C bis 7°C.

4. Verfahren nach einem der vorhergehenden Ansprüche,
**dadurch gekennzeichnet, dass** eine separate Pumpe (5) für die Förderung der zu kühlenden Flüssigkeit oder eine Pumpe, die sowohl für die Förderung der zu kühlenden Flüssigkeit als auch für die Förderung anderer Flüssigkeiten in der Getränkezubereitungsvorrichtung, insbesondere des Getränks, eingesetzt wird, wobei mittels eines Ventils eine Umschaltung zwischen der Förderung der verschiedenen Flüssigkeiten erfolgt.

5. Verfahren nach einem der vorhergehenden Ansprüche,
**dadurch gekennzeichnet, dass** ein Durchlaufkühler (4) mit einem Kühlkörper (10, 10') mit mäanderförmigen oder spiralförmigen Kanälen (11, 11') eingesetzt wird.

6. Verfahren nach einem der vorhergehenden Ansprüche,
**dadurch gekennzeichnet, dass** die Kühlung mit einem Peltierelement, einem Kompressor, einem Absorber, einem Kühlmedium, insbesondere flüssigem Stickstoff, oder Kombinationen hiervon, erfolgt.

7. Verfahren nach einem der vorhergehenden Ansprüche,
**dadurch gekennzeichnet, dass** der Aufbewahrungsbehälter (1) in die Getränkezubereitungsvorrichtung integriert ist oder als von der Getränkezubereitungsvorrichtung separierte Einheit, insbesondere eine thermisch isolierte Einheit, vorgesehen ist.

8. Verfahren nach dem vorhergehenden Anspruch,
**dadurch gekennzeichnet, dass** der Aufbewahrungsbehälter (1) eine Verkaufsverpackung für die zu kühlende Flüssigkeit, insbesondere ein Tetrapak, oder ein Behälter mit einer thermischen Isolierung, insbesondere einen Isoliermantel, ist.

9. Verfahren nach einem der vorhergehenden Ansprüche,
**dadurch gekennzeichnet, dass** die zu kühlende Flüssigkeit ein Milchprodukt ist.

10. Verfahren nach einem der vorhergehenden Ansprüche,
**dadurch gekennzeichnet, dass** die zu kühlende Flüssigkeit permanent oder temporär durch den Durchlaufkühler gefördert wird.

11. Getränkezubereitungsvorrichtung mit einem Aufbewahrungsbehälter (1) für eine zu kühlende Flüssigkeit, einen über eine Zuleitung (2) und eine Ableitung (3) mit dem Aufbewahrungsbehälter (1) verbundenen Durchlaufkühler (4), einer Pumpe (5) für die Förderung der zu kühlenden Flüssigkeit, wobei der Aufbewahrungsbehälter (1) nicht gekühlt wird,
**dadurch gekennzeichnet, dass** die Getränkezubereitungsvorrichtung eine Temperaturmesseinheit zur Messung der Temperatur der zu kühlenden Flüssigkeit aufweist

12. Getränkezubereitungsvorrichtung nach Anspruch 11,
**dadurch gekennzeichnet, dass** der Durchlaufkühler (4) einen Kühlkörper (10, 10') mit mäanderförmigen oder spiralförmigen Kanälen (11, 11') aufweist.

13. Getränkezubereitungsvorrichtung nach Anspruch 11,
**dadurch gekennzeichnet, dass** der Durchlaufkühler mit einem Peltierelement, einem Kompressor, einem Absorber, einem Kühlmedium, insbesondere flüssigem Stickstoff, oder Kombinationen hiervon thermisch gekoppelt ist.

14. Getränkezubereitungsvorrichtung nach einem der Ansprüche 11 bis 13,
**dadurch gekennzeichnet, dass** die mindestens eine Temperaturmesseinheit einen Temperatursensor umfasst.

15. Getränkezubereitungsvorrichtung nach einem der Ansprüche 11 bis 14,
**dadurch gekennzeichnet, dass** die Pumpe (5) für die Förderung der zu kühlenden Flüssigkeit zwischen dem Aufbewahrungsbehälter (1) für die zu kühlende Flüssigkeit und dem Durchlaufkühler (4) angeordnet ist.

16. Getränkezubereitungsvorrichtung nach einem der Ansprüche 11 bis 15,
**dadurch gekennzeichnet, dass** der Aufbewahrungsbehälter (1) eine thermische Isolierung, insbesondere einen Isoliermantel, aufweist.

17. Getränkezubereitungsvorrichtung nach einem der Ansprüche 11 bis 16,
**dadurch gekennzeichnet, dass** der Durchlaufkühler (4) in die Getränkezubereitungsvorrichtung integriert oder mit dem Aufbewahrungsbehälter (1) als externe Einheit verbunden ist.

## Claims

1. Method for cooling liquids for a beverage preparation apparatus, in which method a liquid to be cooled is conveyed through a throughflow cooler (4) by means of a pump (5), wherein the liquid to be cooled is stored in an uncooled storage container (1), **characterized in that** the liquid to be cooled is repeatedly conveyed through the throughflow cooler (4) by means of the pump (5) until the liquid to be cooled is cooled to a prespecified temperature, wherein the pump (5) is activated as soon as the prespecified temperature is exceeded during measurement using a temperature measuring unit (6).

2. Method according to Claim 1,
**characterized in that** the at least one temperature measuring unit (6) comprises a temperature sensor.

3. Method according to either of the preceding claims,
**characterized in that** the prespecified temperature of the liquid to be cooled lies in the range up to a maximum temperature at which the multiplication of germs in the liquid to be cooled is initiated, preferably in the range of from 0°C to 15°C, particularly preferably in the range of from 4°C to 7°C.

4. Method according to one of the preceding claims,
**characterized in that** a separate pump (5) for conveying the liquid to be cooled or a pump which both for conveying the liquid to be cooled and also for conveying other liquids in the beverage preparation apparatus, in particular the beverage, is used, wherein a changeover between conveying the various liquids is performed by means of a valve.

5. Method according to one of the preceding claims,
**characterized in that** a throughflow cooler (4) having a heat sink (10, 10') with meandering or spiral channels (11, 11') is used.

6. Method according to one of the preceding claims,
**characterized in that** the cooling is performed using a Peltier element, a compressor, an absorber, a cooling medium, in particular liquid nitrogen, or combinations thereof.

7. Method according to one of the preceding claims,
**characterized in that** the storage container (1) is integrated into the beverage preparation apparatus or is provided as a unit which is separate from the beverage preparation apparatus, in particular a thermally insulated unit.

8. Method according to the preceding claim,
**characterized in that** the storage container (1) is a retail pack for the liquid to be cooled, in particular a Tetra Pak, or a container with thermal insulation, in particular an insulating jacket.

9. Method according to one of the preceding claims, **characterized in that** the liquid to be cooled is a milk product.

10. Method according to one of the preceding claims, **characterized in that** the liquid to be cooled is conveyed permanently or temporarily through the throughflow cooler.

11. Beverage preparation apparatus comprising a storage container (1) for a liquid to be cooled, a throughflow cooler (4) which is connected to the storage container (1) via a feed line (2) and a discharge line (3), a pump (5) for conveying the liquid to be cooled, wherein the storage container (1) is not cooled,
**characterized in that** the beverage preparation apparatus has a temperature measuring unit for measuring the temperature of the liquid to be cooled.

12. Beverage preparation apparatus according to Claim 11,
**characterized in that** the throughflow cooler (4) has a heat sink (10, 10') with meandering or spiral channels (11, 11').

13. Beverage preparation apparatus according to Claim 11,
**characterized in that** the throughflow cooler is thermally coupled to a Peltier element, a compressor, an absorber, a cooling medium, in particular liquid nitrogen, or combinations thereof.

14. Beverage preparation apparatus according to one of Claims 11 to 13,
**characterized in that** the at least one temperature measuring unit comprises a temperature sensor.

15. Beverage preparation apparatus according to one of Claims 11 to 14,
**characterized in that** the pump (5) for conveying the liquid to be cooled is arranged between the storage container (1) for the liquid to be cooled and the throughflow cooler (4).

16. Beverage preparation apparatus according to one of Claims 11 to 15,
**characterized in that** the storage container (1) has a thermal insulation, in particular an insulating jacket.

17. Beverage preparation apparatus according to one of Claims 11 to 16,
**characterized in that** the throughflow cooler (4) is integrated into the beverage preparation apparatus or is connected to the storage container (1) as an external unit.

## Revendications

1. Procédé de refroidissement de liquides pour un dispositif de préparation de boissons, dans lequel un liquide à refroidir est convoyé au moyen d'une pompe (5) à travers un refroidisseur à circulation (4), le liquide à refroidir étant stocké dans un récipient de stockage (1) non refroidi,
**caractérisé en ce que** le liquide à refroidir est convoyé au moyen de la pompe (5) à travers le refroidisseur à circulation (4) jusqu'à ce que le liquide à refroidir soit refroidi à une température prédéterminée, la pompe (5) étant activée dès que la température prédéterminée est dépassée lors d'une mesure avec une unité de mesure de température (6).

2. Procédé selon la revendication 1,
**caractérisé en ce que** l'au moins une unité de mesure de température (6) comprend un capteur de température.

3. Procédé selon l'une des revendications précédentes,
**caractérisé en ce que** la température prédéterminée du liquide à refroidir se trouve dans un intervalle jusqu'à une température maximale à laquelle une prolifération de germes est initiée dans le liquide à refroidir, de préférence dans un intervalle de 0 °C à 15 °C, plus préférentiellement dans un intervalle de 4 °C à 7 °C.

4. Procédé selon l'une des revendications précédentes,
**caractérisé en ce qu'**une pompe (5) séparée est utilisée pour le convoyage du liquide à refroidir ou une pompe qui permet aussi bien le convoyage du liquide à refroidir que le convoyage d'autres liquides dans le dispositif de préparation de boissons, plus particulièrement de la boisson, de sorte que, au moyen d'une soupape, une commutation a lieu entre les convoyages des différents liquides.

5. Procédé selon l'une des revendications précédentes,
**caractérisé en ce qu'**un refroidisseur à circulation (4) avec un radiateur (10, 10') avec des canaux (11, 11') en zigzags ou en spirale est utilisé.

6. Procédé selon l'une des revendications précédentes,
**caractérisé en ce que** le refroidissement a lieu avec un élément de Peltier, un compresseur, un absorbeur, un fluide de refroidissement, plus particulièrement de l'azote liquide, ou des combinaisons de ceux-ci.

7. Procédé selon l'une des revendications précédentes,
**caractérisé en ce que** le récipient de stockage (1) est intégré dans le dispositif de préparation de boissons ou est conçu comme une unité séparée du dispositif de préparation de boissons, plus particulièrement une unité isolée thermiquement.

8. Procédé selon l'une des revendications précédentes,
**caractérisé en ce que** le récipient de stockage (1) est un emballage de vente pour le liquide à refroidir, plus particulièrement un Tetrapak ou un récipient avec une isolation thermique, plus particulièrement une enveloppe isolante.

9. Procédé selon l'une des revendications précédentes,
**caractérisé en ce que** le liquide à refroidir est un produit laitier.

10. Procédé selon l'une des revendications précédentes,
**caractérisé en ce que** le liquide à refroidir est convoyé en permanence ou temporairement à travers le refroidisseur à circulation.

11. Dispositif de préparation de boissons avec un récipient de stockage (1) pour un liquide à refroidir, un refroidisseur à circulation (4) relié par l'intermédiaire d'une conduite d'alimentation (2) et d'une conduite d'évacuation (3) au récipient de stockage (1), une pompe (5) pour le convoyage du liquide à refroidir, le récipient de stockage (1) n'étant pas refroidi,
**caractérisé en ce que** le dispositif de préparation de boissons comprend une unité de mesure de température pour la mesure de la température du liquide à refroidir.

12. Dispositif de préparation de boissons selon la revendication 11,
**caractérisé en ce que** le refroidisseur à circulation (4) comprend un radiateur (10, 10') avec des canaux (11, 11') en zigzags ou en spirale.

13. Dispositif de préparation de boissons selon la revendication 11,
**caractérisé en ce que** le refroidisseur à circulation est couplé thermiquement avec un élément de Peltier, un compresseur, un absorbeur, un fluide de refroidissement, plus particulièrement de l'azote liquide, ou des combinaisons de ceux-ci.

14. Dispositif de préparation de boissons selon l'une des revendications 11 à 13,
**caractérisé en ce que** l'au moins une unité de mesure de température comprend un capteur de température.

15. Dispositif de préparation de boissons selon l'une des revendications 11 à 14,
**caractérisé en ce que** la pompe (5) est conçue pour le convoyage du liquide à refroidir entre le récipient de stockage (1) pour le liquide à refroidir et le refroidisseur à circulation (4).

16. Dispositif de préparation de boissons selon l'une des revendications 11 à 15,
**caractérisé en ce que** le récipient de stockage (1) comprend une isolation thermique, plus particulièrement une enveloppe isolante.

17. Dispositif de préparation de boissons selon l'une des revendications 11 à 16,
**caractérisé en ce que** le refroidisseur à circulation (4) est intégré dans le dispositif de préparation de boissons ou est relié au récipient de stockage (1) en tant qu'unité externe.
